# EUROPEAN PATENT SPECIFICATION

(11) **EP 3 507 734 B1**
(45) Date of publication and mention of the grant of the patent: **08.07.2020**
(21) Application number: 17870397.1
(22) Date of filing: 13.11.2017
(51) Int. Cl.: G06F 21/32, G06F 21/36, G06F 3/01, G06F 3/0488, G06K 9/00, H04L 9/08, H04L 9/32, H04W 88/02

(54) **METHOD AND ELECTRONIC DEVICE FOR PROVIDING MULTI-LEVEL SECURITY**
VERFAHREN UND ELEKTRONISCHE VORRICHTUNG ZUR BEREITSTELLUNG VON MEHRSTUFIGER SICHERHEIT
PROCÉDÉ ET DISPOSITIF ÉLECTRONIQUE DESTINÉS À FOURNIR UNE SÉCURITÉ À PLUSIEURS NIVEAUX

(30) Priority: 11.11.2016 IN 201641038583; 09.11.2017 IN 201641038583
(43) Date of publication of application: 10.07.2019
(73) Proprietor: Samsung Electronics Co., Ltd., Suwon-si, Gyeonggi-do 16677 (KR)
(72) Inventor: DE, Aloknath, Bangalore Karnataka 560035 (IN); MATHUR, Surbhi, Dehradun Uttarakhand 248001 (IN); DEOTALE, Gunjan, Amravati Maharashtra 444604 (IN); RAUT, Samarth Shankar, Satara Maharashtra 415521 (IN); MALLA, Adil Hamid, Manasbal Ganderbal 191131 (IN); SHAIK, Karimulla, Prakasam Andhra Pradesh 523001 (IN); DAS, Shreyasi, Kolkata West Bengal 700061 (IN); VIJAY, Ankit, Jaipur Rajasthan 302019 (IN)
(74) Representative: HGF
(86) International application number: PCT/KR2017/012788
(87) International publication number: WO 2018/088861

(56) References cited:
- CN-A- 105 824 542
- KR-A- 20160 016 397
- KR-A- 20160 042 522
- KR-A- 20160 067 542
- US-A1- 2013 129 162
- US-A1- 2013 201 155
- US-A1- 2013 257 758
- US-A1- 2015 212 580
- US-A1- 2016 171 281

## Description

### Technical Field

The present disclosure relates to security in electronic devices, and more particularly, to a method and electronic device for providing multi-level security.

### Background Art

Generally, ubiquitous input devices, like those using fingerprint on display (FOD), provide an interactive and fast way for a user of an electronic device to interact with applications with the help of gestures (such as, for example, touch input, long press, etc.). As the electronic device of the user, such as a smartphone, may be accessed by one or more different other users with or without the user's knowledge, demand for providing security to such electronic devices of the user and/or the application(s) installed therein has increased.

With regard to this, various conventional methods are proposed to provide security to the electronic devices and/or the application(s) installed therein. For example, such conventional methods include providing user fingerprint authentication, password type input, pattern type input, and the like. However, with such conventional methods it is very difficult for the user of the electronic device to secure the applications and vital information of the user, stored in the electronic device, in a subtle and real-time manner while sharing the electronic device with one or more other users.

Thus, there remains a need for a robust and simple mechanism for securing access to electronic devices to overcome the above-described issues.

The above information is presented as background information only to help the reader understand the present disclosure. US 2013/129162 discloses triggering of predetermined actions by touch gestures including biometric authentication on an electronic device. US 2013/201155 discloses predetermined actions on an electronic device triggered by a touch gesture. The type of finger (index, middle, ring, etc.) is recognized as well as the area/icon that was touched. US 2015/212580 discloses navigating via touch gestures in an electronic document. Content of the document can be selected for further processing by encircling it with a touch gesture.

### Disclosure of Invention

### Solution to Problem

Provided is a method of providing multi-level security in an electronic device. The method comprises detecting a type of a gesture performed by a user on a portion of the electronic device, identifying the user based on fingerprint data of the user, wherein the fingerprint data of the user is obtained while the gesture is performed, determining at least one activity to be performed based on the detected type of the gesture and the identified user, and controlling the at least one activity in the electronic device.

### Advantageous Effects of Invention

With regard to this, various conventional methods are proposed to provide security to the electronic devices and/or the application(s) installed therein. For example, such conventional methods include providing user fingerprint authentication, password type input, pattern type input, and the like. However, the present disclosure provides the user of the electronic device to secure the applications and vital information of the user, stored in the electronic device, in a subtle and real-time manner while sharing the electronic device with one or more other users.

### Brief Description of Drawings

Reference will now be made in greater detail to various example embodiments, examples of which are illustrated in the accompanying drawings, wherein like reference numbers refer to like elements in the various figures. The embodiments disclosed herein will be better understood from the following description with reference to the drawings, in which:
FIGS. 1A and 1B are block diagrams illustrating various hardware components of an electronic device, according to exemplary embodiments;
FIG. 2 is a flowchart of a method of performing one or more operations in the electronic device, according to exemplary embodiments;
FIGS. 3A-3H illustrate various example scenarios in which the electronic device enables or disables access to a plurality of applications based on a type of user gesture detected, according to exemplary embodiments;
FIG. 4 illustrates an example scenario in which a user manages privacy settings of images within a gallery application using a smart swipe gesture, according to exemplary embodiments;
FIGS. 5A-5G illustrate an example scenario in which the user performs various gestures on a data item, according to exemplary embodiments;
FIG. 6 is a flowchart of a method of performing at least one activity associated with the application(s) in the electronic device, according to exemplary embodiments; and
FIGS. 7A-7C is an example scenario in which invisible security is provided to the electronic device, according to exemplary embodiments.

### Best Mode for Carrying out the Invention

Exemplary embodiments disclosed herein provide a method of providing multi-level security in an electronic device. The method comprises detecting a type of a gesture performed by a user on a portion of the electronic device, identifying the user based on fingerprint data of the user, wherein the fingerprint data of the user is obtained while the gesture is performed, determining at least one activity to be performed based on the detected type of the gesture and the identified user, and controlling the at least one activity in the electronic device.

In an exemplary embodiment, the method for identifying the user based on the fingerprint data of the user comprises extracting the fingerprint data of the user while the gesture is performed on a data item of an application, and identifying the user by matching the fingerprint data of the user with a biometric template in a biometric template database.

In an exemplary embodiment, the fingerprint data is used to identify a type of the user's finger performing the gesture, wherein the at least one activity is determined based on the type of finger, the type of gesture, and the identified user.

In an exemplary embodiment, a first level of security is provided to the electronic device by identifying the user based on fingerprint data of the user and a second level of security is provided to the electronic device by determining the at least one activity to be performed based on the type of the gesture and the identified user, and wherein the first level of security is different than the second level of security.

In an embodiment, the at least one activity comprises at least one of controlling access to an application in the electronic device, controlling access to at least one portion of the electronic device, controlling access to at least one service in the electronic device, controlling access to data in the electronic device, and controlling access data item available in the portion on which the gesture is performed.

In an exemplary embodiment, the gesture is associated with a direction to dynamically determine the at least one activity to be performed in the electronic device.

Exemplary embodiments herein provide a method for providing multi-level security in an electronic device. The method comprises detecting a gesture performed by a user on a portion of a screen of the electronic device, identifying the user based on fingerprint data of the user, wherein the fingerprint data of the user is obtained while the gesture is performed, detecting an application corresponding to the portion of the screen of the electronic device, and controlling at least one activity associated with the application to be automatically performed in the electronic device.

In an exemplary embodiment, the method for identifying the user based on the fingerprint data of the user comprises extracting the fingerprint data of the user while the gesture is performed on a data item, and identifying the user by matching the fingerprint data of the user with a biometric template in a biometric template database.

In an embodiment, a first level of security is provided to the electronic device by identifying the user based on the fingerprint data of the user and a second level of security is provided to the electronic device by determining the application corresponding to the portion of the screen of the electronic device, and wherein the first level of security is different than the second level of security.

In an exemplary embodiment, the at least one activity comprises at least one of controlling access to the application, controlling access to at least one service of the application, and controlling access to data of the application.

Exemplary embodiments herein provide an electronic device for providing multi-level security. The electronic device comprises a memory, a processor, and a gesture recognizer configured to detect a type of a gesture performed by a user on a portion of the electronic device. Further, the electronic device includes a fingerprint recognizer configured to identify the user based on a fingerprint data of the user, where the fingerprint data of the user is obtained while performing the gesture. Furthermore, the electronic device includes an activity controller configured to: determine at least one activity to be performed based on the type of the gesture and the identified user, and control the at least one activity to be automatically performed in the electronic device.

Exemplary embodiments herein provide an electronic device for providing multi-level security. The electronic device includes a memory, a processor, and a gesture recognizer configured to detect a type of a gesture performed by a user on a portion of a screen of the electronic device. Further, the electronic device includes a fingerprint recognizer configured to identify the user based on fingerprint data of the user, wherein the fingerprint data of the user is obtained while performing the gesture. Furthermore, the electronic device includes an activity controller configured to: detect an application corresponding to the portion of the screen of the electronic device, and cause to automatically perform at least one activity associated with the application in the electronic device.

These and other aspects of the embodiments disclosed herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### Mode for the Invention

Various embodiments of the present disclosure will now be described in detail with reference to the accompanying drawings. In the following description, specific details such as detailed configurations and components are merely provided to assist with the overall understanding of these embodiments of the present disclosure. Therefore, it should be apparent to those of ordinary skill in the art that various changes and modifications of the embodiments described herein can be made without departing from the scope and spirit of the present disclosure. In addition, descriptions of well-known functions and constructions are omitted for clarity and conciseness.

Also, the various embodiments described herein are not necessarily mutually exclusive, as some embodiments can be combined with one or more other embodiments to form new embodiments. Herein, the term "or" as used herein, refers to a non-exclusive or, unless otherwise indicated. The examples used herein are intended merely to facilitate an understanding of ways in which the embodiments herein can be practiced and to further enable those of ordinary skill in the art to practice the embodiments herein. Accordingly, the examples should not be construed as limiting the scope of the embodiments disclosed herein.

As is traditional in the field, embodiments may be described and illustrated in terms of blocks which carry out a described function or functions. These blocks, which may be referred to herein as managers, engines, controllers, units, modules, or the like, may be physically implemented by analog and/or digital circuits such as logic gates, integrated circuits, microprocessors, microcontrollers, memory circuits, passive electronic components, active electronic components, optical components, hardwired circuits, and the like, and may optionally be driven by firmware and software. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the present disclosure. Likewise, the blocks of the embodiments may be physically combined into more complex blocks without departing from the scope of the present disclosure.

Embodiments herein provide a method of managing activities in an electronic device. The method includes detecting a type of a gesture performed by a user on a portion of the electronic device. Further, the method includes identifying the user based on fingerprint data of the user, wherein the fingerprint data of the user is obtained while the gesture is being performed. Further, the method includes determining at least one activity to be performed based on the type of the gesture and the identified user. Furthermore, the method includes controlling the at least one activity to be automatically performed in the electronic device.

For example, consider a scenario in which the user of the electronic device is obligatory required to share the electronic device with one or more other users on demand. Thus, it is therefore very important, in terms of security, for the user to secure access to the vital information associated with various applications and/or the electronic device to prevent the access to one or more other users. In this regard, conventionally, only a default access control configuration can be applied by the user, for example, the default access control configuration can include file permissions, application permissions, locking of the electronic device using a password, pin, pattern, or the like. Unlike conventional methods and systems, the method of the present embodiment can be used to provide an additional security level (second level of security) along with the aforementioned (default) access control configuration. According to the method of the present embodiment, the user can manage the functionality of each application, sub-functionalities of the functionality of each application, and the like. Thus, whenever the user is required to share the electronic device with one or more other users on demand, the user can therefore successively secure vital information by performing one or more types of gesture (pre-defined) by using a type of finger (or, a pre-defined finger ID) on any portion of the electronic device. For example, the information can include, for example, any application, the type of data related to the application, an active page of the application, data access control of the electronic device and/or application, service access of the electronic device and/or application, etc.

Unlike conventional methods and systems, the method of the present embodiment can be used to secure the information by overlaying an idle screen thereon, and thus, only the user of the electronic device may know a location of the information when the display is overlaid with the idle screen, a corresponding portion of the screen where the information is hidden, and a corresponding fingerprint and type of gesture, in order to access the hidden information.

Unlike conventional methods and systems, the method of the present embodiment can be used to provide dynamic permission reconfiguration of the application and/or electronic device based on the type of gesture performed by the user.

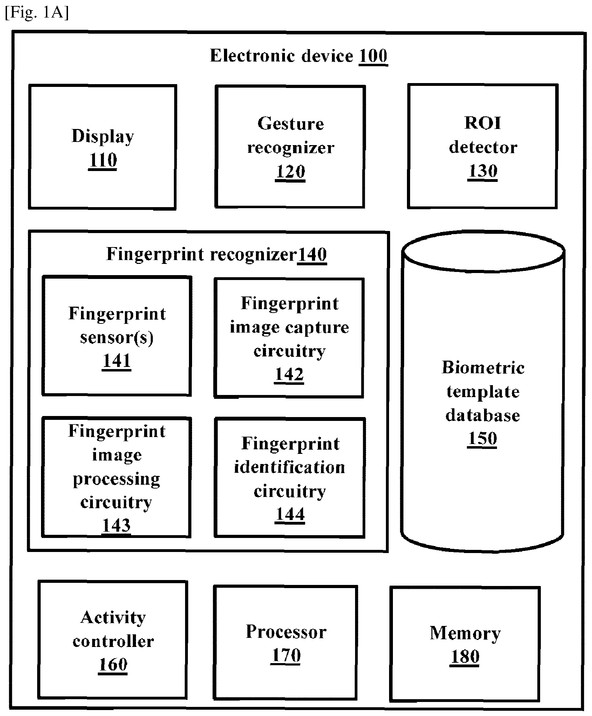

Exemplary embodiments will now be described below by referring to the drawings, and more particularly to FIGS. 1A through 7C, wherein similar reference numerals denote similar elements throughout the figures.

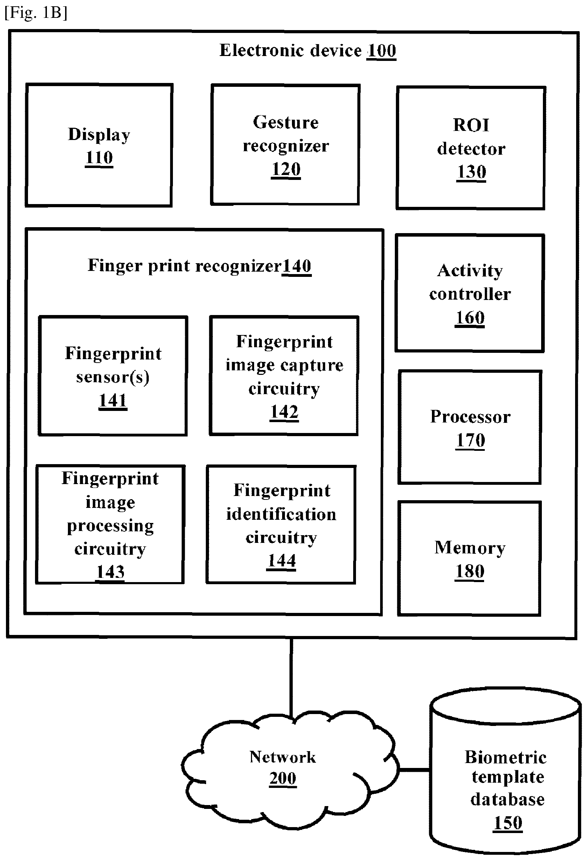

FIGS. 1A and 1B are block diagrams illustrating various hardware components of an electronic device 100, according to embodiments as disclosed herein.

Referring to FIG. 1A, the electronic device 100 can be, for example, a smartphone, a cellular phone, a tablet, a phablet, a dual display device, a portable multimedia device, personal digital assistants (PDAs), a gaming controller, edge-to-edge displays, etc. Further, the electronic device 100 can be a wearable device such as, for example, a smart watch, a smart bracelet, a smart glass, or the like. In another embodiment the electronic device 100 can be Internet of things (IoT) device.

The electronic device 100 includes a plurality of hardware components configured to perform at least one service. The at least one service such as, for example, accessing the applications, installing the applications, support for the services associated with the applications, multiple driver configurations for at least one hardware component to provide the services corresponding thereto. For example, display drivers configured to execute the display hardware functionalities. As seen a display 110 (e.g., a Cathode Ray Tube (CRT) display, a Liquid Crystal Display (LCD), an Organic Light-Emitting Diode (OLED), a Light-emitting diode (LED), can be associated with a plurality of sensors (not shown) arranged to sense a gesture 102 performed by one or more users on the display 110. Although not shown herein, the electronic device 100 may also include, for example, a haptic feedback mechanism configured to provide a haptic feedback to the user. In an example embodiment, the haptic feedback can be provided by way of a tone indication, vibratory alert indication, or the like.

In an embodiment, the plurality of sensors (integrated on the display 110) can individually or collectively be used to form a fingerprint on display (FOD). As a result of the FOD, according to the method of the present embodiment, the fingerprints (full or partial) of the user can be sensed from anywhere on the display 110 and multiple combinations of fingerprints and gestures can be designed for user inputs. In another embodiment, the electronic device 100 can also include other sensors (not shown) such as for example, inertial sensors, micro electro-mechanical sensors (MEMS), accelerometer, or the like.

The display 110 can be configured to display a data item of the application(s). In one or more embodiments, the data item includes, without limitation, a graphical element i.e., icon, content, text, image, object, or the like.

The electronic device further includes a gesture detector 120, a Region of Interest (ROI) detector 130, a fingerprint recognizer 140, a biometric template database 150, an activity controller 160, a processor 170 (e.g., a central processing unit (CPU), a graphics processing unit (GPU), a hardware chipset, etc.) communicatively coupled to a memory 180 (e.g., a volatile memory and/or a non-volatile memory). The memory 180 includes storage locations configured to be addressable through the processor 170, and a communicator (not shown) configured to communicate internally with aforementioned hardware components, other hardware components, and externally with other components and/or electronic devices through any of the existing network communication means. Although the electronic device is described to include various devices such as a gesture recognizer 120, a Region of Interest (ROI) detector 130, a fingerprint recognizer 140, a biometric template database 150, an activity controller 160, all these devices can be implemented as a single hardware processor - a processor 170.

The gesture recognizer 120 can be configured to detect a gesture input provided (by the user of the electronic device 100) on the display 110. In another embodiment, the gesture input can be detected on a portion of the electronic device 100, the portion of the electronic device 100 can be, for example, a region on the screen of the display 110. The gesture can be, for example, a rail gesture, a swipe gesture, a user-defined gesture, a system defined gesture, and the like.

Unlike conventional methods and systems, the method of the present embodiment can be used to dynamically define the type of gesture and associate corresponding activity to be performed by the electronic device 100 based on the type of gesture (as defined). In another embodiment, the method of the present embodiment can, further, be used to define a type of finger (authenticated using biometric information) to perform the type of gesture (as defined) and associate corresponding activity to be performed by the electronic device 100 based on the type of finger and the type gesture.

For example, if the user performs a tap gesture on data item of a social networking service (SNS) application by using a pointer finger, then according to the method of the present embodiment, the messages corresponding to a contact-A in the SNS application are automatically hidden. Further, in a similar example, if the user performs the swipe gesture on the data item of the SNS application by using a middle finger, then the one more activities corresponding to the biometric information associated with the middle finger and type of gesture are performed i.e., the hidden messages of the contact-A can be accessed. Further, in yet another similar example, scenario, if the user performs the gesture in an anti-clockwise direction along a region (portion of the screen identified by the ROI detector 130) encircling the data item of the SNS application by using a thumb, then according to the method of the present embodiment the hidden messages of the contact-A are deleted.

The fingerprint recognizer 140 can be configured to identify the user based on the fingerprint data of the user. The fingerprint data of the user is obtained while the user performs the gesture input on the display 110. In an embodiment, the fingerprint recognizer 140 includes fingerprint sensor (s) 141 configured to detect the at least one finger gesture provided by the user. The display 110 can include a plurality of fingerprint sensor(s) 141 embedded therein. The fingerprint sensor(s) 141 can also be an under-display fingerprint scanner embedded on the display 110.

Further, the fingerprint recognizer 140 includes a fingerprint image capture circuit 142, a fingerprint image processing circuit 143, and a fingerprint identification (fingerprint ID) circuit 144.

The fingerprint image capture circuit 142, coupled to the fingerprint sensor (s) 141 can be configured to capture an image of the fingerprint (e.g., type of fingerprint gesture and finger type which may be pre-defined or defined during the enrollment of the fingerprint gesture) identified by the fingerprint sensor (s) 141. For example, if the user performs a gesture using the pointer finger, then the fingerprint sensor (s) 141 can be configured to trigger the fingerprint image capture circuit 142. The fingerprint image capture circuit 142 can therefore be configured to capture a fingerprint image of the pointer finger. Once the fingerprint image of the pointer finger is captured by the fingerprint image capture circuit 142, thereafter, the fingerprint image processing circuit 143 can be configured to process the fingerprint image for quality assessment.

The fingerprint identification circuit 144 can be configured to identify (or, indicate) the type of finger of the user used to perform the gesture input on the display 110. The type of finger of the user can be, for example, the pointer finger, the thumb, the middle finger, a ring finger, and a little finger. In another embodiment, the fingerprint identification circuit 144 can be configured to identify the user based on the fingerprint gesture performed using the type of finger.

The image features i.e., keypoints are extracted from the image captured by the fingerprint image processing circuit 143 and are stored in the biometric template database 150.

For example, the biometric template database 150 can be configured to include biometric templates associated with each user, fingerprint indexed information, or the like. Each authorized user of the electronic device 100 may have different fingerprint biometric information associated with different activity. In another example, an authorized user-A can perform the gesture input to select a plurality of data items, displayed on the display 110, in an anti-clockwise direction using a pointer finger. The electronic device 100 can be configured to lookup the biometric template database 150 for at least one biometric template. The at least one biometric template includes, but not limited to, the fingerprint information. Pre-defined activity can be associated with pointer finger traversing in anti-clockwise direction through the particular gesture. The activity to be performed can be defined dynamically by the user and/or the electronic device 100.

The activity controller 160 can be configured to communicate with the biometric template database 150 to determine the at least one activity to be performed based on the type of the gesture and the identified user finger. For example, if the at least one biometric template includes the activity such as **"*hide*"** associated with the pointer finger when traversed in anti-clockwise direction through the particular gesture, then the activity controller 160 can be configured to **"*hide*"** displaying of the plurality of data items displayed on the display 110.

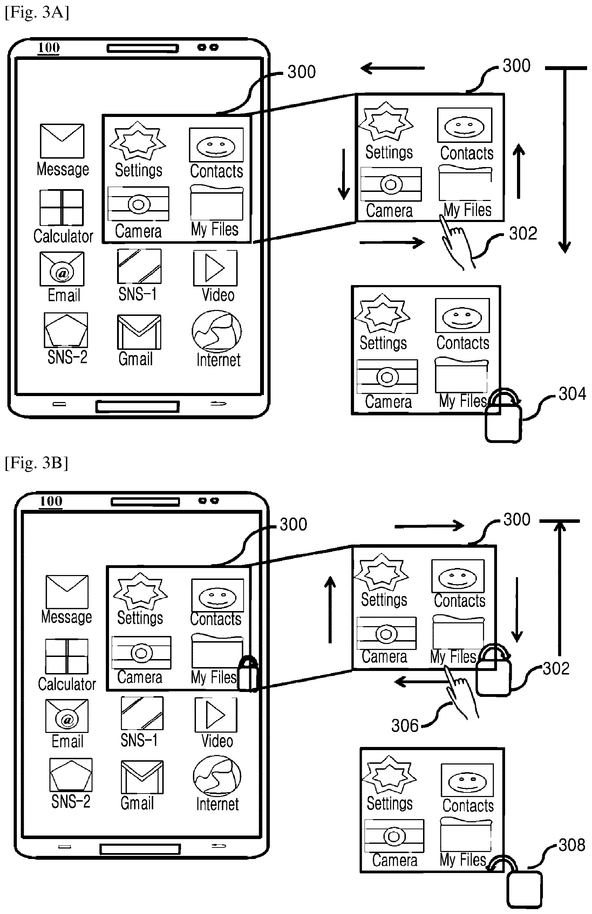

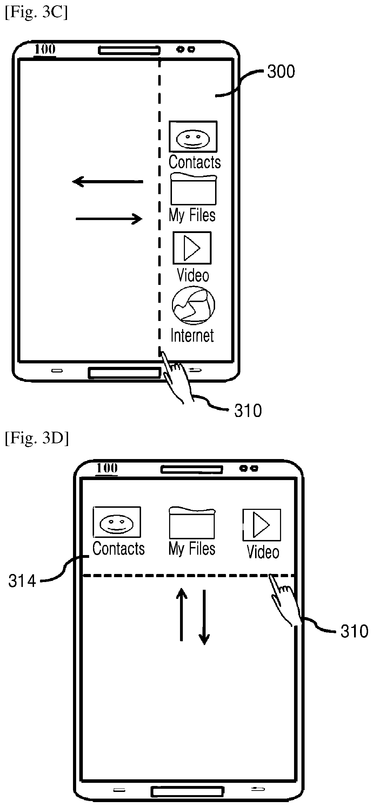

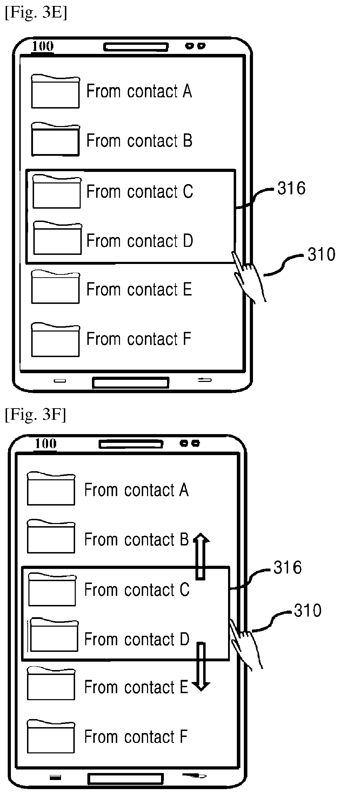

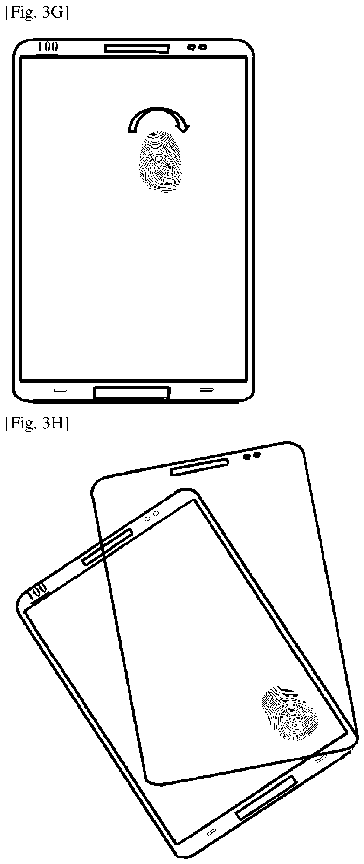

The memory 180 can store a variety of information, including fingerprint data, biometric information, applications installed, applications accessed through the network means, or the like. For each user of the electronic device, corresponding fingerprint biometric information can be stored and/or accessible from the memory 180. The fingerprint biometric information of each authenticated user can include for example, images, templates, or the like (as shown in FIG. 3). The fingerprint biometric information can be indexed to quickly determine if a user fingerprint is stored in the memory 180. In an embodiment, the memory 180 can be configured to communicate with the biometric template database 150. The memory 180 may include one or more computer-readable storage media. The memory 180 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 180 may, in some examples, be considered a non-transitory storage medium. The term "non-transitory" may indicate that the storage medium is not embodied in a carrier wave or a propagated signal. However, the term "non-transitory" should not be interpreted to mean that the memory 180 is non-movable. In some examples, the memory 180 can be configured to store larger amounts of information than the memory. In certain examples, a non-transitory storage medium may store data that can, over time, change (e.g., in Random Access Memory (RAM) or cache).

Unlike conventional methods and systems, the method of the present embodiment can be used to provide multilevel security with respect to the electronic device 100 and/or vital information of the user contained in the electronic device 100. Each security level of the multilevel security corresponds to a particular amount of functionality of the electronic device 100 to which the user may secure access thereto. The functionality such as, for example, one or more activity related to one or more applications. The one or more activities may relate to accessing a particular object, image, or contact of the application, a connectivity control activity, download options (enable/disable), interfaces to social networks, a cloud communication capability, a device-to-device communication capability, and the like.

In another embodiment, the biometric template database 150 can be remotely located to the electronic device 100 and can be accessible through a network 200 (as shown in FIG. 1B). In this embodiment, the biometric template database 150 can be remotely located in a server (not shown), cloud network (not shown), or the like.

FIGS. 1A and 1B show exemplary hardware components of the electronic device 100 but it is to be understood that embodiments are not limited thereon. In other embodiments, the electronic device 100 may include a higher or lower number of hardware components. Further, the labels or names of the hardware components are used only for illustrative purposes and do not limit the scope of the present disclosure. One or more hardware components can be combined together to perform a same or substantially similar function in the electronic device 100.

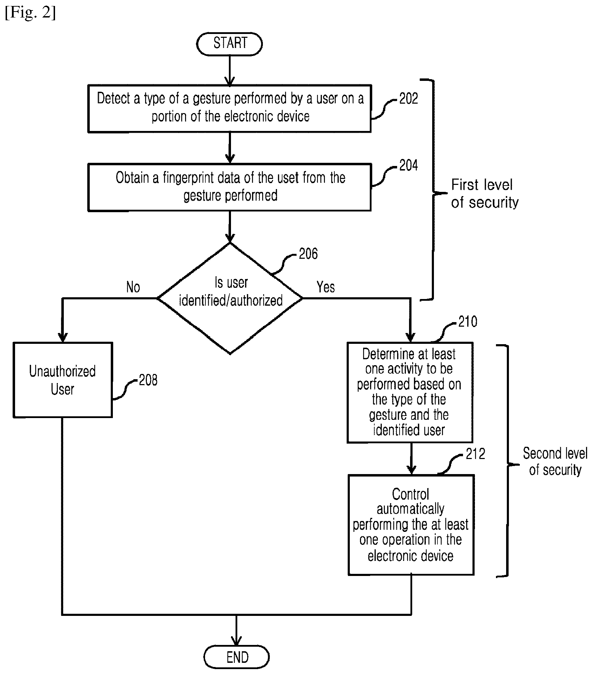

FIG. 2 is a flowchart of a method of performing at least one activity in the electronic device 100, according to embodiments as disclosed herein.

In operation 202, the method includes detecting the type of the gesture performed by the user on the portion of the electronic device 100. In an embodiment, the gesture recognizer 120 may detect the type of the gesture performed by the user on the portion of the display 110. For example, the portion of the 110 may define the ROI.

In operation 204, the fingerprint data of the user is obtained from the gesture performed. In an embodiment, the fingerprint recognizer 140 may obtain the fingerprint data of the user from the gesture performed.

In operation 206, it is determined whether the user is identified and/or authorized based on the fingerprint data obtained from the user. In an embodiment, the fingerprint recognizer 140 may determine whether the user is identified and/or authorized based on the fingerprint data obtained from the user.

Thus, operations 202-206 herein provide the first level of security to the electronic device 100, for example, requiring the user to unlock the electronic device 100 and/or applications installed therein, by using a user defined password, pattern, pin, or the like.

Further, if in operation 206, the fingerprint recognizer 140 provides an indication to the processor 180 indicating that the user has not been identified and/or authorized, then in operation 208, a notification is provided to the user indicating the unauthorized user. The notification can be provided by using any existing methods such as, for example, displaying a notification about an error in a password, pattern, or pin, a vibratory indication, a beep, and the like.

Further, if in operation 206, the fingerprint recognizer 140 provides an indication to the processor 180 indicating that the user is identified and/or authorized, then in operation 210, at least one activity to be performed may be determined based on the type of the gesture and the identified user. In an embodiment, the activity controller 160 may determine the at least one activity to be performed based on the type of the gesture and the identified user.

In operation 212, the at least one activity is controlled to be automatically performed in the electronic device 100. In an embodiment, the activity controller 160 may control the at least one activity to be automatically performed in the electronic device 100.

Thus, the operations 210-212 herein provide the second level of security to the electronic device 100.

The various actions, acts, blocks, operations, or the like in FIG. 2 may be performed in the order presented, in a different order or simultaneously. Further, in some embodiments, some of the actions, acts, blocks, operations, or the like may be omitted, added, modified, skipped, or the like without departing from the scope of the present disclosure.

FIGS. 3A-3H illustrate various example scenarios in which the electronic device 100 enables or disables the access of the plurality of applications based on the type of user gesture detected, according to embodiments.

Unlike conventional methods and systems, the method of the present embodiment can be used to provide the dynamic permission reconfiguration of the one or more applications of the electronic device 100. For example, the user may dynamically perform the type of gesture with the corresponding fingerprint ID (i.e., finger type) on the one or more data items in order to prevent the one or more applications from being accessed by any other user thereof.

Referring to FIG. 3A, when the user performs a type of gesture 302 using the pointer finger (authorized pointer finger then the user may have successively competed the first security level) to encircle on a portion 300 of the display 100 in anti-clockwise direction then, the data items (corresponding to the one or more applications) within the portion 300, the type of gesture 302, the type of fingerprint ID, and the directionality of the type of gesture 300 are obtained. The obtained information is then communicated to the biometric template table 150. The biometric template table 150 can be configured to identify the type of user activity corresponding to the received information. Thus, as shown in FIG. 3A, in response to receiving the command from the biometric template table 150, the activity controller 160 can be configured to secure the access 304 (successively enabled the second security level) of the one or applications associated within the portion 300. For example, the type of second security level to be applied thereof may be pre-defined and stored in the memory 180.

Similarly, referring to FIG. 3B, when the user performs a type of gesture 306 using the pointer finger (authorized, first security level) to encircle on the portion 300 of the display 100 in a clockwise direction, then, the data items (corresponding to the one or more applications) within the portion 300, the type of gesture 304, the type of fingerprint ID, and the directionality of the type of gesture 300 are obtained. The aforementioned information, as obtained, is then communicated with the biometric template table 150. The biometric template table 150 can be configured to identify the type of user activity corresponding to the received information. Thus, as shown in FIG. 3B, in response to the receiving the command from the biometric template table 150, the activity controller 160 can be configured provide the access 308 (second security level) of the one or applications associated within the portion 300.

In another embodiment, of FIGS. 3A and 3B, the at least one activity can be defined by the system or defined by the user of the electronic device 100. The other activity can include, for example, Finger-1: Anticlockwise>>restricted mode for objects inside the portion 300, Finger-1: clockwise>>restricted mode for objects outside the portion 300; Or Finger-1: encircle>>restricted mode for objects inside the portion 300, and Finger-2: encircle>>normal mode for objects inside the portion 300.

In another embodiment, as shown in FIG. 3C when the user performs a type of gesture 310 from edge of the display screen towards center of the display screen using the pointer finger (authorized, first security level) then, the data items (corresponding to the one or more applications) within the portion 312, the type of gesture 310, the type of fingerprint ID, and the directionality of the type of gesture 312 are obtained. Thus, in conjunction with FIGS. 3A and 3B, a partial or full virtual layer 312 differentiating a group of applications to have restricted permissions can be created. The permissions such as, for example, Finger A >> Edge to Center >> enforce read access only, Finger A >> Center to Edge >> enforce normal access, Finger A >> Edge to Center >> enforce read access only, and Finger B >> Edge to Center >> enforce normal access.

Similarly, in another embodiment of FIG. 3C, according to the method of the present embodiment a partial or full virtual layer 314 differentiating the group of applications to have restricted permissions can be created, as shown in FIG. 3D.

For example, in order to define permission levels such as No-access, Read only, and Read and Write, the biometric template table 150 can be configured with Finger-type: e.g., index finger for restriction and middle finger to remove restriction, type of gesture, and directionality of the gesture. Further, a transparent GUI overlay on a selected portion can be provided on the group data items associated with one or more applications to have restricted permissions (as shown in FIG. 3E-3F).

Further, referring to FIG. 3G-3H in which the accelerometer signals can assist in differentiating above two rotation gestures. For example, the user can perform a gesture i.e., the accelerometer signals in addition to the fingerprint and its location for seamless activation of restrictions (without the other user knowing about it). Further, while handing over the electronic device 100 on-the-go, the user can therefore hold electronic device 100 between two fingers (authorized) at the location where the app icon is present and let the electronic device 100 revolve slightly during the motion swing.

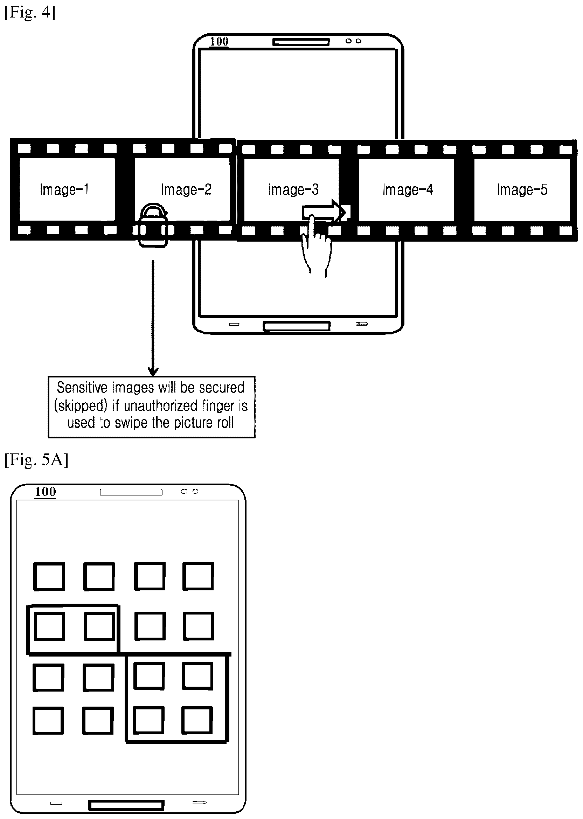

FIG. 4 is an example scenario in which the user manages the privacy of the images within the gallery application using smart swipe, according to embodiments as disclosed herein.

Unlike conventional methods, the method of the present embodiment can be used to skip/hide the sensitive images if an unauthorized finger is used to perform a swipe gesture on the picture roll. This security enhancement does not require the user to re-login after handing over the electronic device 100 to another user. As shown in FIG. 4, the image-2 is secured in a way that only the authorized user (finger type) performing the pre-defined/authorized gesture to scroll through the roll of images can be able to view the image-2. Further, even if the authorized user performs the type of gesture using the type of finger which is not defined to unlock the image-2, then the access to view the image-2 shall be denied.

Similarly, whenever the user performs type of using a user specific finger on the thumbnail icon of any image or object from the gallery application or any other application, then the image can be viewed as a pop-up. Further, the user may therefore perform a drag gesture with a specific finger into the partial FOD display region to view a protected thumbnail as the pop up.

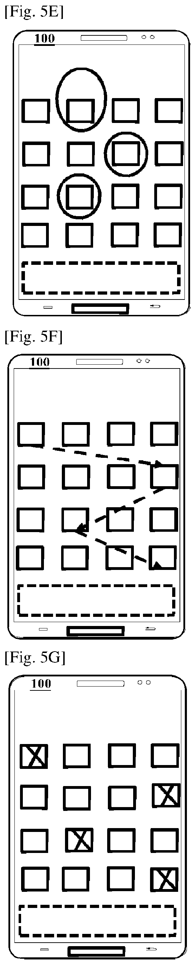

FIGS. 5A-5D illustrates an example in which the user performs various gestures on a data item, according to an embodiment as disclosed herein.

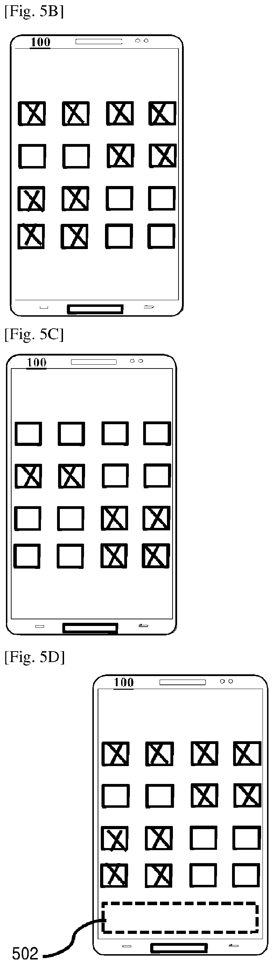

The user performs a gesture in one of a clockwise direction(as shown in FIG. 5B) and a counter-clockwise direction(as shown in FIG. 5C) to secure or make open(unsecure) the data item (as shown in FIGS. 5A-5C).

The user performs a long press gesture in a FOD region 502 to activate application control change. The various gestures includes tap, repeated group gestures (as shown in FIG. 5D), repeated grouping gestures (as shown in FIG. 5E), change in direction of drag vector (corner points) (as shown in FIGS. 5F-5G). For example, based on the type of gesture performed using the specific finger of the user the one or more activity of the application can be managed. That is, disabling the internet access for a particular app, e.g. the SNS, disable screenshot when GUI is occupied by confidential content, e.g., online examination, suppress search suggestions for search engines, E-mail client-disable certain functionality like sending out the e-mails, deleting e-mails from the spam folder, or the like.

Unlike conventional methods and systems, the method of the present embodiment can thereby provide the second security level based on the type of gesture performed by using the type of biometric information associated with each finger ID.

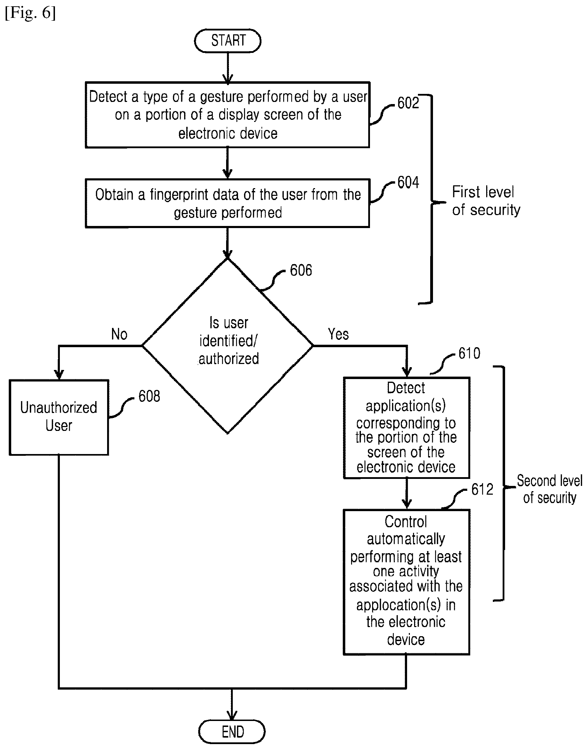

FIG. 6 is a flowchart of a method of performing at least one activity associated with the application in the electronic device 100, according to embodiments as disclosed herein.

In operation 602, the method includes detecting the type of the gesture performed by the user on the portion of the display screen of the electronic device 100. In an embodiment, the method allows the gesture recognizer 120 to detect the type of the gesture performed by the user on the portion of the display 110. For example, the portion of the 110 may define the ROI.

In operation 604, the method includes obtaining the fingerprint data of the user from the gesture performed. In an embodiment, the fingerprint recognizer 140 can be configured to obtain the fingerprint data of the user from the gesture performed.

In operation 606, the method includes determining whether the user is identified and/ or authorized based on the fingerprint data obtained from the user. In an embodiment, fingerprint recognizer 140 can be configured to determine whether the user is identified and/or authorized based on the fingerprint data obtained from the user.

Thus, the operations 602-606 herein provides the first level of security to the electronic device 100, for example, requiring the user to unlock the electronic device 100 and/or applications installed herein, by using a user defined password, pattern, pin, or the like.

Further, if in operation 606, the fingerprint recognizer 140 provides an indication to the processor 180 indicating that the user is not identified and/or authorized, then in operation 608, the method includes providing the notification to the user indicating unauthorized user. The notification can be provided by using any of the existing method such as, for example, displaying a notification about an error in a password, pattern or pin, a vibratory indication, a beep, and the like.

Further, if in operation 606, the fingerprint recognizer 140 provides an indication to the processor 180 indicating that the user is identified and/or authorized, then in operation 610, the method includes detecting the application corresponding to the portion of the screen of the electronic device 100. In an embodiment, the method allows the activity controller 160 to determining at least one activity to be performed based on the type of the gesture and the identified user.

For example, the ROI detector 130 can be configured to detect the presence of at least one application or data item corresponding to the applications on the portion of the display screen to which the type of gesture is performed.

In operation 612, the method includes controlling the at least one activity associated with the application to be automatically performed. In an embodiment, the method allows the activity controller 160 to perform the at least one activity associated with the application. For example, the at least one activity associated with the applications can be, for example, performing a read/write/delete operation, controlling features of the applications such as, enabling/disabling a connectivity type, data usage, managing contacts associated therewith, managing information pertaining to the contacts, and the like.

The various actions, acts, blocks, operations, or the like in FIG. 6 may be performed in the order presented, in a different order or simultaneously. Further, in some embodiments, some of the actions, acts, blocks, operations, or the like may be omitted, added, modified, skipped, or the like without departing from the scope of the present disclosure.

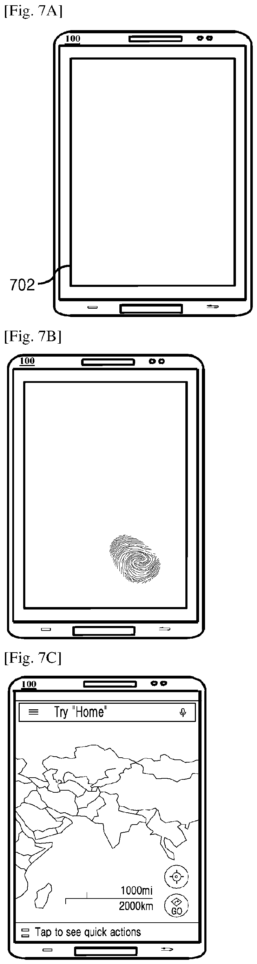

FIGS. 7A-7C is an example scenario in which invisible security is provided to the electronic device 100, according to an embodiment as disclosed herein.

The electronic device 100 includes a plethora of applications installed therein. In several circumstances, it is very important for the user to dynamically secure the one or more applications, activity of the applications, content within the applications, or the like. Although, the first security level i.e., pin or fingerprint mechanism aids the user for unlocking secure areas of the electronic device 100. But there can be instances when the user is forced to disclose the information if found suspicious.

Unlike conventional methods and systems, the method of the present embodiment can therefore be used to hide the data behind an idle screen 702, and only the user will know the location where data is hidden, the type of data hidden, and the corresponding fingerprint to be used on the corresponding location (as shown in FIGS. 7A-7C).

The embodiments disclosed herein can be implemented through at least one software program running on at least one hardware device and performing network management functions to control the elements. The elements shown in FIGS. 1A and 7C include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those of ordinary skill in the art will recognize that the embodiments herein can be practiced with modification within the scope of the embodiments as described herein.

## Claims

1. A method of providing multi-level security in an electronic device (100), the method comprising:
detecting, by the electronic device (100), a type of a first gesture (302) performed by a user on a screen of the electronic device (100);
identifying the user based on fingerprint data of the user, wherein the fingerprint data of the user is obtained while the first gesture (302) is being performed;
detecting a portion (300) of the screen of the electronic device (100), the portion of the screen determined by the type of the first gesture;
detecting at least two applications corresponding to the portion (300) of the screen of the electronic device (100); and
controlling at least one activity associated with the at least two applications to be automatically performed in the electronic device (100),
wherein the at least one activity comprises securing access (304) to the at least two applications.

2. The method of claim 1, wherein identifying the user based on the fingerprint data of the user comprises:
extracting the fingerprint data of the user while the gesture is being performed on a data item of an application; and
identifying the user by matching the fingerprint data of the user with a biometric template in a biometric template database.

3. The method of claim 1, wherein a first level of security is provided to the electronic device (100) by identifying the user based on fingerprint data of the user and a second level of security is provided to the electronic device (100) by determining the at least one activity to be performed based on the type of the first gesture (302) and the identified user; and wherein the first level of security is different than the second level of security.

4. The method of claim 1, wherein the fingerprint data is used to identify a type of finger of the user performing the gesture, wherein the at least one activity is determined based on the type of finger, the type of the first gesture (302), and the identified user.

5. The method of claim 1, wherein the at least one activity further comprises at least one of controlling access to at least one portion of the electronic device (100), controlling access to at least one service in the electronic device (100), controlling access to data in the electronic device (100), and controlling access to a data item available in the portion on which the gesture is performed.

6. The method of claim 1, wherein the first gesture is associated with a direction to dynamically determine the at least one activity to be performed in the electronic device (100).

7. The method of claim 1, further comprising:
detecting, by the electronic device (100), a type of a second gesture (306) performed by a user on a screen of the electronic device (100);
identifying the user based on fingerprint data of the user, wherein the fingerprint data of the user is obtained while the second gesture (306) is being performed;
detecting a portion (300) of the screen of the electronic device (100), the portion (300) of the screen determined by the type of the second gesture (306);
detecting at least two applications corresponding to the portion (300) of the screen of the electronic device (100) as determined by the second gesture (306); and
controlling at least one activity associated with the at least two applications to be automatically performed in the electronic device (100),
wherein the at least one activity comprises providing access (308) to the at least two applications.

8. An electronic device (100) for providing multi-level security, the electronic device (100) comprising:
a memory (180);
a processor (170) configured to :
detect a type of a first gesture (302) performed by a user on a screen of the electronic device (100);
identify the user based on fingerprint data of the user, wherein the fingerprint data of the user is obtained while the first gesture (302) is being performed; and
detect a portion (300) of the screen of the electronic device (100), the portion (300) of the screen determined by the type of the first gesture (302);
detect at least two applications corresponding to the portion (300) of a screen of the electronic device (100), and
control at least one activity associated with the at least two application to be automatically performed in the electronic device (100),
wherein the at least one activity comprises securing access (304) to the at least two applications

9. The electronic device (100) of claim 8, wherein the electronic device (100) identifies the user based on the fingerprint data of the user by:
extracting the fingerprint data of the user while the gesture is being performed on a data item; and
identifying the user by matching the fingerprint data of the user with a biometric template in a biometric template database.

10. The electronic device (100) of claim 8, wherein a first level of security is provided to the electronic device (100) by identifying the user based on the fingerprint data of the user and a second level of security is provided to the electronic device (100) by determining the at least one activity to be performed based on the type of the gesture, and the identified user; and wherein the first level of security is different than the second level of security.

11. The electronic device (100) of claim 8, wherein the fingerprint data is used to identify a type of finger of the user performing the gesture, wherein the at least one activity is determined based on the type of finger, the type of gesture, and the identified user.

12. The electronic device (100) of claim 11, wherein the at least one activity further comprises at least one of controlling access to at least one portion of the electronic device (100), controlling access to at least one service in the electronic device (100), controlling access to data in the electronic device (100), and controlling access to a data item available in the portion on which the gesture is performed.

13. The electronic device (100) of claim 11, wherein the gesture is associated with a direction to dynamically determine the at least one activity to be performed in the electronic device (100).

14. The electronic device (100) of claim 11, wherein the processor is further configured to:
detect an application corresponding to a portion (300) of a screen of the electronic device (100), and
control at least one activity associated with the application to be automatically performed in the electronic device (100).

## Patentansprüche

1. Verfahren zur Bereitstellung mehrstufiger Sicherheit in einer elektronischen Vorrichtung (100), wobei das Verfahren folgendes umfasst:
durch die elektronische Vorrichtung (100), Erkennen einer Art einer ersten Geste (302), die durch einen Benutzer auf einem Bildschirm der elektronischen Vorrichtung (100) ausgeführt wird;
Identifizieren des Benutzers auf der Basis von Fingerabdruckdaten des Benutzers, wobei die Fingerabdruckdaten des Benutzers erhalten werden, während die erste Geste (302) ausgeführt wird;
Erkennen eines Teils (300) des Bildschirms der elektronischen Vorrichtung (100), wobei der Teil des Bildschirms durch die Art der ersten Geste bestimmt wird;
Erkennen von mindestens zwei Applikationen, die dem Teil (300) des Bildschirms der elektronischen Vorrichtung (100) entsprechen; und
Steuern mindestens einer Aktivität, die den mindestens zwei Applikationen zugeordnet ist, für eine automatische Ausführung in der elektronischen Vorrichtung (100),
wobei die mindestens eine Aktivität das Sicherstellen eines Zugriffs (304) auf die mindestens zwei Applikationen umfasst.

2. Verfahren nach Anspruch 1, wobei das Identifizieren des Benutzers auf der Basis der Fingerabdruckdaten des Benutzers folgendes umfasst:
Extrahieren der Fingerabdruckdaten des Benutzers, während die Geste an einem Datenelement einer Applikation ausgeführt wird; und
Identifizieren des Benutzers durch Abgleichen der Fingerabdruckdaten des Benutzers mit einer biometrischen Vorlage in einer biometrischen Vorlagendatenbank.

3. Verfahren nach Anspruch 1, wobei eine erste Sicherheitsstufe für die elektronische Vorrichtung (100) bereitgestellt wird durch Identifizieren des Benutzers anhand von Fingerabdruckdaten des Benutzers, und wobei eine zweite Sicherheitsstufe für die elektronische Vorrichtung (100) bereitgestellt wird durch Bestimmen der mindestens einen auszuführenden Aktivität auf der Basis der Art der ersten Geste (302) und des identifizierten Benutzers; und wobei sich die erste Sicherheitsstufe von der zweiten Sicherheitsstufe unterscheidet.

4. Verfahren nach Anspruch 1, wobei die Fingerabdruckdaten verwendet werden, um eine Art des Fingers des Benutzers zu identifizieren, der die Geste ausführt, wobei die mindestens eine Aktivität anhand der Art des Fingers, der Art der ersten Geste (302) und des identifizierten Benutzers bestimmt wird.

5. Verfahren nach Anspruch 1, wobei die mindestens eine Aktivität ferner mindestens eines der folgenden umfasst: Steuern des Zugriffs auf mindestens einen Teil der elektronischen Vorrichtung (100), Steuern des Zugriffs auf mindestens einen Dienst in der elektronischen Vorrichtung (100), Steuern des Zugriffs auf Daten in der elektronischen Vorrichtung (100) und Steuern des Zugriffs auf ein in dem Teil verfügbaren Datenelement, wo die Geste ausgeführt wird.

6. Verfahren nach Anspruch 1, wobei die erste Geste einer Richtung zugeordnet ist, um dynamisch die mindestens eine in der elektronischen Vorrichtung (100) auszuführende Aktivität zu bestimmen.

7. Verfahren nach Anspruch 1, ferner umfassend:
durch die elektronische Vorrichtung (100), Erkennen einer Art einer zweiten Geste (306), die durch einen Benutzer auf einem Bildschirm der elektronischen Vorrichtung (100) ausgeführt wird;
Identifizieren des Benutzers auf der Basis von Fingerabdruckdaten des Benutzers, wobei die Fingerabdruckdaten des Benutzers erhalten werden, während die zweite Geste (306) ausgeführt wird;
Erkennen eines Teils (300) des Bildschirms der elektronischen Vorrichtung (100), wobei der Teil (300) des Bildschirms durch die Art der zweiten Geste (306) bestimmt wird;
Erkennen von mindestens zwei Applikationen, die dem Teil (300) des Bildschirms der elektronischen Vorrichtung (100) entsprechen, gemäß dessen Bestimmung durch die Art der zweiten Geste (306); und
Steuern mindestens einer Aktivität, die den mindestens zwei Applikationen zugeordnet ist, für eine automatische Ausführung in der elektronischen Vorrichtung (100),
wobei die mindestens eine Aktivität das Bereitstellen eines Zugriffs (308) auf die mindestens zwei Applikationen umfasst.

8. Elektronische Vorrichtung (100) zur Bereitstellung mehrstufiger Sicherheit, wobei die elektronische Vorrichtung (100) folgendes umfasst:
einen Speicher (180);
einen Prozessor (170), der für folgende Zwecke gestaltet ist:
Erkennen einer Art einer ersten Geste (302), die durch einen Benutzer auf einem Bildschirm der elektronischen Vorrichtung (100) ausgeführt wird;
Identifizieren des Benutzers auf der Basis von Fingerabdruckdaten des Benutzers, wobei die Fingerabdruckdaten des Benutzers erhalten werden, während die erste Geste (302) ausgeführt wird; und
Erkennen eines Teils (300) des Bildschirms der elektronischen Vorrichtung (100), wobei der Teil (300) des Bildschirms durch die Art der ersten Geste (302) bestimmt wird;
Erkennen von mindestens zwei Applikationen, die dem Teil (300) eines Bildschirms der elektronischen Vorrichtung (100) entsprechen, und
Steuern mindestens einer Aktivität, die den mindestens zwei Applikationen zugeordnet ist, für eine automatische Ausführung in der elektronischen Vorrichtung (100),
wobei die mindestens eine Aktivität das Sicherstellen eines Zugriffs (304) auf die mindestens zwei Applikationen umfasst.

9. Elektronische Vorrichtung (100) nach Anspruch 8, wobei die elektronische Vorrichtung (100) den Benutzer anhand der Fingerabdruckdaten des Benutzers durch folgendes identifiziert:
Extrahieren der Fingerabdruckdaten des Benutzers, während die Geste an einem Datenelement ausgeführt wird; und
Identifizieren des Benutzers durch Abgleichen der Fingerabdruckdaten des Benutzers mit einer biometrischen Vorlage in einer biometrischen Vorlagendatenbank.

10. Elektronische Vorrichtung (100) nach Anspruch 8, wobei eine erste Sicherheitsstufe für die elektronische Vorrichtung (100) bereitgestellt wird durch Identifizieren des Benutzers anhand der Fingerabdruckdaten des Benutzers, und wobei eine zweite Sicherheitsstufe für die elektronische Vorrichtung (100) bereitgestellt wird durch Bestimmen der mindestens einen auszuführenden Aktivität auf der Basis der Art der Geste und des identifizierten Benutzers; und wobei sich die erste Sicherheitsstufe von der zweiten Sicherheitsstufe unterscheidet.

11. Elektronische Vorrichtung (100) nach Anspruch 8, wobei die Fingerabdruckdaten verwendet werden, um eine Art des Fingers des Benutzers zu identifizieren, der die Geste ausführt, wobei die mindestens eine Aktivität anhand der Art des Fingers, der Art der Geste und des identifizierten Benutzers bestimmt wird.

12. Elektronische Vorrichtung (100) nach Anspruch 11, wobei die mindestens eine Aktivität ferner mindestens eines der folgenden umfasst: Steuern des Zugriffs auf mindestens einen Teil der elektronischen Vorrichtung (100), Steuern des Zugriffs auf mindestens einen Dienst in der elektronischen Vorrichtung (100), Steuern des Zugriffs auf Daten in der elektronischen Vorrichtung (100) und Steuern des Zugriffs auf ein in dem Teil verfügbaren Datenelement, wo die Geste ausgeführt wird.

13. Elektronische Vorrichtung (100) nach Anspruch 11, wobei die Geste einer Richtung zugeordnet ist, um dynamisch die mindestens eine in der elektronischen Vorrichtung (100) auszuführende Aktivität zu bestimmen.

14. Elektronische Vorrichtung (100) nach Anspruch 11, wobei der Prozessor ferner für folgende Zwecke gestaltet ist:
Erkennen einer Applikation, die einem Teil (300) auf einem Bildschirm der elektronischen Vorrichtung (100) entspricht, und
Steuern der mindestens einen Aktivität, die der Applikation zugeordnet ist, so dass diese automatisch in der elektronischen Vorrichtung (100) ausgeführt wird.

## Revendications

1. Procédé destiné à fournir une protection à plusieurs niveaux dans un dispositif électronique (100), le procédé comprenant les étapes suivantes :
détection, par le dispositif électronique (100), d'un type d'un premier geste (302) effectué par un utilisateur sur un écran du dispositif électronique (100) ;
identification de l'utilisateur sur la base des données d'empreintes digitales de l'utilisateur, les données d'empreintes digitales de l'utilisateur étant obtenues pendant que le premier geste (302) est effectué ;
détection d'une partie (300) de l'écran du dispositif électronique (100), la partie de l'écran étant déterminée par le type du premier geste ;
détection d'au moins deux applications correspondant à la partie (300) de l'écran du dispositif électronique (100) ; et
commande d'au moins une activité associée aux au moins deux applications à exécuter automatiquement dans le dispositif électronique (100),
l'au moins une activité comprenant la sécurisation de l'accès (304) aux au moins deux applications.

2. Procédé selon la revendication 1, l'identification de l'utilisateur sur la base des données d'empreintes digitales de l'utilisateur comprenant les étapes suivantes :
extraction des données d'empreintes digitales de l'utilisateur pendant que le geste est effectué sur un élément de données d'une application ; et
identification de l'utilisateur par la comparaison des données d'empreintes digitales de l'utilisateur avec un modèle biométrique dans une base de données de modèles biométriques.

3. Procédé selon la revendication 1, un premier niveau de sécurité étant fourni au dispositif électronique (100) en identifiant l'utilisateur sur la base des données d'empreintes digitales de l'utilisateur et un second niveau de sécurité étant fourni au dispositif électronique (100) en déterminant l'au moins une activité à effectuer sur la base du type du premier geste (302) et de l'utilisateur identifié ; et le premier niveau de sécurité étant différent du second niveau de sécurité.

4. Procédé selon la revendication 1, les données d'empreintes digitales étant utilisées pour identifier un type de doigt de l'utilisateur qui effectue le geste, l'au moins une activité étant déterminée sur la base du type de doigt, du type du premier geste (302) et de l'utilisateur identifié.

5. Procédé selon la revendication 1, l'au moins une activité comprenant en outre la commande de l'accès à au moins une partie du dispositif électronique (100), la commande de l'accès à au moins un service dans le dispositif électronique (100), la commande de l'accès à des données dans le dispositif électronique (100) et/ou la commande de l'accès à une donnée disponible dans la partie sur laquelle le geste est effectué.

6. Procédé selon la revendication 1, le premier geste étant associé à une direction pour déterminer dynamiquement l'au moins une activité à effectuer dans le dispositif électronique (100).

7. Procédé selon la revendication 1, comprenant en outre les étapes suivantes :
détection, par le dispositif électronique (100), d'un type d'un second geste (306) effectué par un utilisateur sur un écran du dispositif électronique (100) ;
identification de l'utilisateur sur la base des données d'empreintes digitales de l'utilisateur, les données d'empreintes digitales de l'utilisateur étant obtenues pendant que le second geste (306) est effectué ;
détection d'une partie (300) de l'écran du dispositif électronique (100), la partie (300) de l'écran étant déterminée par le type du second geste (306) ;
détection d'au moins deux applications correspondant à la partie (300) de l'écran du dispositif électronique (100) telle que déterminée par le second geste (306) ; et
commande d'au moins une activité associée aux au moins deux applications à exécuter automatiquement dans le dispositif électronique (100),
l'au moins une activité comprenant la fourniture de l'accès (308) aux au moins deux applications.

8. Dispositif électronique (100) pour assurer une sécurité à plusieurs niveaux, le dispositif électronique (100) comprenant :
une mémoire (180) ;
un processeur (170) conçu pour :
détecter un type de premier geste (302) effectué par un utilisateur sur un écran de l'appareil électronique (100) ;
identifier l'utilisateur sur la base des données d'empreintes digitales de l'utilisateur, les données d'empreintes digitales de l'utilisateur étant obtenues pendant que le premier geste (302) est effectué ; et
détecter une partie (300) de l'écran du dispositif électronique (100), la partie (300) de l'écran étant déterminée par le type du premier geste (302) ;
détecter au moins deux applications correspondant à la partie (300) d'un écran de l'appareil électronique (100), et
commander au moins une activité associée aux au moins deux applications à exécuter automatiquement dans le dispositif électronique (100),
l'au moins une activité comprenant la sécurisation de l'accès (304) aux au moins deux applications.

9. Dispositif électronique (100) selon la revendication 8, le dispositif électronique (100) identifiant l'utilisateur sur la base des données d'empreintes digitales de l'utilisateur par :
extraction des données d'empreintes digitales de l'utilisateur pendant que le geste est effectué sur un élément de données ; et
identification de l'utilisateur par la comparaison des données d'empreintes digitales de l'utilisateur avec un modèle biométrique dans une base de données de modèles biométriques.

10. Dispositif électronique (100) selon la revendication 8, un premier niveau de sécurité étant fourni au dispositif électronique (100) en identifiant l'utilisateur sur la base des données d'empreintes digitales de l'utilisateur et un second niveau de sécurité étant fourni au dispositif électronique (100) en déterminant l'au moins une activité à effectuer sur la base du type de geste, et de l'utilisateur identifié ; et le premier niveau de sécurité étant différent du second niveau de sécurité.

11. Dispositif électronique (100) selon la revendication 8, les données d'empreintes digitales étant utilisées pour identifier un type de doigt de l'utilisateur qui effectue le geste, l'au moins une activité étant déterminée sur la base du type de doigt, du type de geste et de l'utilisateur identifié.

12. Dispositif électronique (100) selon la revendication 11, l'au moins une activité comprenant en outre la commande de l'accès à au moins une partie du dispositif électronique (100), la commande de l'accès à au moins un service dans le dispositif électronique (100), la commande de l'accès à des données dans le dispositif électronique (100) et/ou la commande de l'accès à une donnée disponible dans la partie sur laquelle le geste est effectué.

13. Dispositif électronique (100) selon la revendication 11, le geste étant associé à une direction pour déterminer dynamiquement l'au moins une activité à effectuer dans le dispositif électronique (100).

14. Dispositif électronique (100) selon la revendication 11, le processeur étant en outre conçu pour :
détecter une application correspondant à une partie (300) d'un écran du dispositif électronique (100), et
commander au moins une activité associée à l'application qui doit être automatiquement exécutée dans le dispositif électronique (100).
